# FASCICULE DE BREVET EUROPEEN

(11) **EP 1 934 309 B1**
(45) Date de publication et mention de la délivrance du brevet: **14.03.2018**
(21) Numéro de dépôt: 06807216.4
(22) Date de dépôt: 12.10.2006
(51) Int. Cl.: C10J 3/60, C10J 3/48

(54) **DISPOSITIF ET PROCÉDÉ DE GAZÉIFICATION DE LA BIOMASSE ET DE DÉCHETS ORGANIQUES SOUS HAUTE TEMPÉRATURE ET AVEC APPORT D'ÉNERGIE EXTÉRIEURE POUR LA GÉNÉRATION D'UN GAZ DE SYNTHÈSE DE HAUTE QUALITÉ.**
VORRICHTUNG UND VERFAHREN ZUM VERGASEN VON BIOMASSE UND ORGANISCHEN ABFÄLLEN BEI HOHER TEMPERATUR UND MIT EINER EXTERNEN STROMVERSORGUNG ZUR ERZEUGUNG EINES HOCHWERTIGEN SYNTHESEGASES
DEVICE AND PROCESS FOR GASIFYING BIOMASS AND ORGANIC WASTES AT A HIGH TEMPERATURE AND WITH AN EXTERNAL POWER SUPPLY FOR GENERATING A HIGH-QUALITY SYNTHESIS GAS

(30) Priorité: 14.10.2005 FR 0553128
(43) Date de publication de la demande: 25.06.2008
(73) Titulaire: Commissariat à l'Énergie Atomique et aux Énergies Alternatives, 75015 Paris (FR); Europlasma, 40110 Morcenx (FR)
(72) Inventeur: BROTHIER, Meryl, F-13100 Aix en Provence (FR); LABROT, Maxime, F-33200 Bordeaux Cauderan (FR); GRAMONDI, Patrick, F-13760 Saint Cannat (FR); SEILER, Jean-Marie, F-38180 Seyssins (FR); ROUGE, Sylvie, F-38320 Brie et Angonnes (FR); MICHON, Ulysse, F-33800 Bordeaux (FR)
(74) Mandataire: Ilgart, Jean-Christophe
(86) Numéro de dépôt international: PCT/EP2006/067351
(87) Numéro de publication internationale: WO 2007/042559

(56) Documents cités:
- EP-A- 0 021 601
- FR-A- 2 326 226
- GB-A- 2 160 219
- US-A- 3 409 695
- US-A- 5 087 270
- US-A1- 2003 024 806
- US-A1- 2004 251 241

## Description

L'invention se rapporte à un dispositif de gazéification de biomasse, prétraitée ou non, et/ou de déchets organiques solides et/ou liquides et/ou gazeux en vue de la production d'un gaz de synthèse de haute qualité, c'est-à-dire comportant très peu d'impuretés et riche en hydrogène et en monoxyde de carbone.

De nombreux procédés portent sur la valorisation énergétique de la biomasse et des déchets organiques pour générer un gaz valorisable. Celui-ci peut être utilisé pour alimenter un procédé aval de co-génération ou bien, si la qualité du gaz le permet, de servir comme réactif dans un procédé chimique comme par exemple la synthèse de carburants (de type Fischer Tropsch notamment).

Diverses publications décrivent diverses techniques de gazéification de la biomasse pour la génération d'un gaz de synthèse.

Ainsi, on connaît les réacteurs à lit fixe, qu'ils soient à co- ou contre-courant, pressurisés ou non. Il est possible de mentionner à titre d'exemple les brevets US 4643109, US 5645615 ou bien encore US 4187672. Un certain nombre de variantes ont notamment été imaginées pour augmenter le niveau de conversion de la charge carbonée mise en oeuvre dans ce genre de dispositif. Cependant ces techniques ne permettent pas d'optimiser la conversion, et notamment de minimiser la formation de méthane et d'espèces organiques plus lourdes telles que les goudrons.

Un autre exemple est donné dans le document GB 2160219.

Ce document décrit un procédé de gazéification mettant en oeuvre une torche à plasma pour produire un gaz chaud composé principalement de CO2 et de H2 à partir de matière carbonée, comme du charbon ou de la tourbe. Cette matière carbonée est introduite sous forme pulvérulente, en même temps qu'un agent oxydant, dans une chambre de combustion. La matière carbonée est introduite dans la chambre de gazéification, soit par un conduit annulaire disposé autour du générateur plasma, ce qui correspond à un mode d'injection de la charge concentrique au flux de plasma, soit par une lance, ce qui correspond à un mode d'injection latéral de la charge par rapport au flux de plasma. Dans ce document, la chambre de gazéification a une forme cylindrique.

Une cuve remplie d'un lit de matière carbonée solide, présente un axe quasiment perpendiculaire à celui de la chambre de gazéification. Elle a pour fonction de réduire la teneur en CO2 et H2O du mélange gazeux issu de la chambre de gazéification.

Un inconvénient du dispositif présenté dans le brevet GB 2 160 219 est l'importante inertie thermique du dispositif associé au procédé. L'ensemble du dispositif doit être isolé avec des quantités importantes de réfractaire, ce qui entraîne des surcoûts importants, et des augmentations de taille du dispositif. Ce dispositif présente en outre une inertie importante, avec pour effet un découplage entre la grande souplesse de la torche à plasma et l'inertie très importante des zones réactionnelles.

En outre, avec ce type de forme cylindrique de la chambre de gazéification, le mélange entre le flux de plasma et la matière est très limité, le flux de plasma à très haute viscosité n'étant pas ou peu pénétré par la matière injectée. Un tel mélange est alors d'autant plus imparfait que la partie centrale axiale de l'écoulement plasma, à très haute température (et à plus haute température que la température moyenne du plasma, soit très supérieure à 5000 K dans les torches à plasma d'arc non transféré, ce résultat étant induit par le chauffage du gaz par un arc électrique centré à l'intérieur de la torche) et donc de très haute viscosité, demeure, avec les modes d'injection et les géométries de chambre de gazéification connues antérieurement, « inaccessible » à la matière injectée.

Par ailleurs, l'extrapolation de l'un ou l'autre des types de réacteur décrits ou mentionnés ci-dessus est limitée au-delà d'une certaine taille et donc d'une certaine capacité de traitement. En particulier, la survenue de points chauds ou de passages préférentiels pour les gaz constituent des limitations rédhibitoires au delà d'une certaine taille, qui est fonction de nombreux paramètres, et en particulier de la nature de la charge à traiter.

On connaît également les réacteurs à lit fluidisé, pressurisés ou non, intégrant ou non une boucle de recirculation. A titre indicatif, le document US2004/0045279 présente un tel système en faisant la distinction entre la zone de gazéification et celle de combustion, où une partie de la charge carbonée et/ou du gaz généré lors de la gazéification est utilisée pour apporter l'énergie nécessaire à la transformation de gazéification qui est quant à elle endothermique

La plupart des procédés répondant à ce type de technologie souffrent de limitations en température (∼1000°C) liées à l'agglomération possible du lit selon, notamment, la teneur en cendres du matériaux à gazéifier. Un autre problème est dû à l'érosion des systèmes de recirculation du caloporteur ou de l'agent fluidisant. Ces procédés souffrent aussi de limitations en pression, de par leur système d'alimentation en biomasse. En outre leur température de fonctionnement limitée n'est pas favorable à la génération optimale d'hydrogène et de monoxyde de carbone. Il serait nécessaire de monter plus haut en température pour favoriser la formation d'hydrogène et de monoxyde de carbone. Certaines autres techniques ont été proposées, comme celles décrites dans le brevet US 6808543, mais elles restent tout de même assez limitées en terme d'efficacité. Par ailleurs, toujours afin de maîtriser les phénomènes d'agglomération de cendre rendant impossible la fluidisation de la charge à traiter, ce type de réacteur fonctionne à température modérée, à savoir à des températures inférieures à la température de fusion des cendres. Cette condition opératoire sur la température induit, de fait, une qualité limitée du gaz de synthèse généré par ce type de réacteur.

On connaît également les réacteurs à milieu réactionnel principalement constitué d'un bain de sels ou de métal fondu.

Ces dispositifs, comme celui décrit dans le brevet US 6110239, exploitent la faculté que possèdent de tels bains pour convertir une charge carbonée en gaz majoritairement composés de monoxyde de carbone et d'hydrogène. Néanmoins, ce type de procédé nécessite la mise en oeuvre de réfractaires souvent lourds à gérer et onéreux. Par ailleurs, ces types de réacteurs souffrent d'une inertie thermique autant au démarrage qu'à l'arrêt, ce qui induit des précautions d'usage parfois très pénalisantes pour l'exploitation du procédé.

Les réacteurs à flux entraîné, comme ceux décrits dans les brevets US 5 620 487 et US 4 680 035, ont pour intérêt d'apporter des solutions palliatives aux limitations d'emploi des réacteurs à lit fixes et fluidisés. Ces dispositifs nécessitent généralement une très bonne maîtrise de la préparation de la charge à traiter (comme la granulométrie de l'entrant pour les solides), afin d'assurer un taux de conversion suffisant lors de son passage dans le réacteur de gazéification. Une attention spécifique doit en outre être apportée à la maîtrise et au pilotage de la température dans le réacteur, et donc au choix des matériaux réfractaires

Les documents US 5968212 ou DE 4446803 décrivent des techniques qui permettent de gérer des zones réfractorisées à double constituant et des zones refroidies pour prendre en compte les contraintes thermiques. Le document US 2004/251241 décrit également un réacteur de gazéification par un plasma thermique de matière avec deux zones. Au-delà de cette différenciation entre technologies, les procédés connus peuvent être classés en deux grandes catégories, à savoir les dispositifs autothermes (i.e. ceux utilisant une partie du pouvoir calorifique de la biomasse et/ou des déchets organiques pour assurer leur transformation qui est endothermique) et les procédés dits allothermes (i.e. définis ici comme étant ceux qui utilisent une énergie externe au système constitué par la biomasse pour en assurer la conversion).

Les procédés allothermiques permettent d'augmenter la production de monoxyde de carbone et d'hydrogène.

Les procédés de gazéification dits allothermiques peuvent utiliser soit un combustible tel que du gaz naturel soit de l'électricité.

Pour le cas où il est plus judicieux d'utiliser, au moins en partie, l'électricité comme source d'énergie (au delà du facteur coût, le critère de minimisation de rejet de gaz à effet de serre pouvant être déterminant), deux outils de chauffe peuvent être particulièrement envisagées, à savoir :
- l'arc électrique,
- la torche à plasma, à arc soufflé ou transféré.

Ainsi, un certain nombre de dispositifs reposant sur l'utilisation de ces outils de chauffe ont été proposés. A titre indicatif peuvent être cités respectivement pour l'arc électrique et la torche à plasma les brevets US 6173002 et US 5544597.

L'un des inconvénients majeurs de ces dispositifs est la persistance d'une qualité de gaz médiocre en sortie de gazéifieur, du moins non satisfaisante pour pouvoir alimenter un procédé chimique utilisant le gaz de synthèse en tant que propre réactif. Cette limitation est principalement due à la difficulté d'assurer une mise en contact satisfaisante de la biomasse et/ou du déchet organique avec le milieu plasma généré au droit de l'arc ou par la torche.

Plus précisément, cette mise en contact ne concerne d'une part pas la totalité du flux à valoriser et d'autre part ne constitue pas un mélange suffisamment intime avec le milieu plasmagène pour être pleinement efficace.

L'ensemble des technologies existantes induit un certain nombre de contraintes relatives à leur exploitation et/ou à la limitation de leur potentialité.

Synthétiquement, pour chacun des dispositifs actuellement connus, se pose(nt) au moins un, et le plus souvent plusieurs, des problèmes suivants :
- faiblesse du rendement matière (en hydrogène et monoxyde de carbone),
- nécessité d'utiliser un réactant onéreux tel que l'oxygène pour éviter toute dilution (à l'azote) du gaz de synthèse produit,
- présence plus ou moins importante de sous-produits de dégradation de la biomasse ou des déchets organiques dans le gaz de synthèse généré (goudrons,....). La qualité de ce mélange gazeux peut alors ne pas être suffisante pour qu'il soit utilisable comme réactif de synthèse de procédé chimique aval (comme par exemple le procédé Fischer Tropsch),
- faible latitude quant à la maîtrise du rapport H2/CO,
- lourdeur de mise en oeuvre, notamment dans les phases de démarrage et d'arrêt,
- pollution éventuelle du gaz de synthèse par le matériau réfractaire utilisé (usures),
- complexité du pilotage,
- importance de la quantité d'élément réfractaire nécessaire pour protéger le gazéifieur,
- contraintes liées au choix du réfractaire afin d'aboutir à un couple durée de vie/coût de ce dernier satisfaisant, choix souvent conditionné à la composition des cendres et au mode de pilotage du réacteur (fréquence des cycles thermiques),
- difficultés pour travailler en pression et importance du volume réactionnel nécessaire à la transformation ce qui induit des tailles de réacteur pénalisante (en terme de bilan thermique et/ou de quantité de réfractaire nécessaire à son garnissage),
- et, éventuellement, faible flexibilité pour pouvoir valoriser aussi bien une phase condensée (solide ou liquide) qu'un gaz (qui pourrait potentiellement être issu d'un pré-traitement de la biomasse et/ou des déchets organiques).

### EXPOSÉ DE L'INVENTION

L'invention propose un dispositif selon la revendication 1 permettant de pallier tout ou partie des difficultés rencontrées dans les dispositifs de l'art antérieur.

Selon un premier aspect de l'invention, celle -ci a pour objet un dispositif de gazéification, par plasma thermique, de matière pour la génération d'un gaz de synthèse de haute qualité, comportant des moyens ou une chambre de mélange permettant un mélange homogène d'au moins un dard plasma avec la charge à traiter. L'invention, pour tenir compte de la difficulté de réaliser un mélange plasma/matière (du fait, notamment, de la haute viscosité du dard plasma), met en oeuvre des moyens pour assurer la pénétration et le parcours le plus long de la matière à traiter dans le milieu plasma.

L'injection de la matière est réalisée dans une zone où celle-ci tend à être homogénéisée au milieu plasma (c'est le mélange plasma/matières à traiter que l'on veut homogénéiser). Cette injection est réalisée, par rapport au dard plasma, de manière à pénétrer l'écoulement ou les écoulements plasma (cas de plusieurs torches).

Par exemple la totalité du flux de la matière à traiter est injectée « au droit » du ou des dards plasma.

En outre une ou des trajectoires d'injection, en sortie de l'injecteur (ou des injecteurs), peut/peuvent être linéaire(s) ou en vortex (ou en une combinaison des deux), de manière à contrôler le temps de séjour de la matière.

Un procédé d'injection de la matière, selon l'invention, est donc fondamentalement différent des procédés décrits antérieurement et notamment de celui décrit dans le brevet GB 2160219.

La chambre de mélange ou de gazéification est sphérique ou ovoïde, afin, comme expliqué ci-dessus, de rendre efficace l'homogénéisation du plasma et de la matière à traiter dans cette chambre et de minimiser les pertes thermiques.

Cette forme permet une homogénéisation nettement meilleure que celle obtenue avec une forme cylindrique.

Par rapport aux structures antérieures, le dispositif selon l'invention optimise le milieu réactionnel plasma et réduit le temps de séjour nécessaire pour convertir la charge carbonée. Ainsi les pertes aux parois peuvent être rendues acceptables dans la zone de mélange dans la mesure où la réactivité du dard plasma (là ou règne niveau de température locale très élevé, avec présence de molécules dissociées ou ionisées) est utilisée au mieux pour la conversion. Sur le plan technologique, le dispositif selon l'invention propose une zone réactionnelle de taille et une quantité de réfractaire réduites par rapport aux dispositifs de l'art antérieur.

L'un des autres intérêts du dispositif faisant l'objet de la présente invention réside dans le fait que le volume des résidus générés par le dispositif est soit équivalent, soit plus faible que ceux induits par les dispositifs décrits dans l'état de l'art. Par ailleurs, le résidu est inerté du fait de sa vitrification in situ ce qui permet donc une utilisation secondaire ou une mise en décharge moins onéreuse.

La présente invention propose en outre une combinaison de deux sous-ensembles principaux, des moyens ou un sous-ensemble de mélange (assurant également pour partie un pré-traitement de la charge ou, a minima, sa mise en température) et des moyens ou un sous-ensemble réactionnel.

Les moyens de mélange comportent des moyens pour positionner des moyens d'injection d'un flux de matière et pour positionner au moins une source plasma pour former au moins un dard plasma, et forment une zone de mélange homogène d'un flux de ladite matière et d'au moins un dard plasma.

Des moyens, disposés en aval de la zone de mélange, dans un sens d'écoulement de ce mélange, forment une zone de réaction du mélange de ladite matière et du plasma.

Ainsi le réacteur se compose d'une chambre de mélange et d'une zone ou chambre de réaction. En fonctionnement, le plasma occupe une part importante du volume de la chambre de mélange et le mélange plasma/gaz chauds/particules chaudes, en cours de conversion, se propage dans la zone de réaction confinée pour éviter l'apparition de forts gradients de température qui pourraient occasionner la formation d'espèce non souhaitées comme le méthane ou des goudrons.

Selon un mode particulier de réalisation, des moyens permettent de capter ou de suivre la température dans la zone de réaction, et cette mesure de la température peut être utilisée pour contrôler, dans la zone de mélange, l'injection d'un produit pour former une couche de protection de la paroi intérieure de la zone de mélange et de la zone de réaction en fonction de la température dans la zone de réaction.

L'invention permet de réaliser un dispositif minimisant ou évitant l'utilisation de matériaux réfractaires classiques et onéreux pour les parois de la zone de mélange et de la zone de réaction. En effet, la formation d'une couche de protection adéquate et contrôlée permet de réduire les pertes thermiques à la paroi et les phénomènes de corrosion de cette dernière sans utiliser de réfractaires spécifiques.

La zone de réaction a de préférence une forme et un volume imposant à la charge à traiter un temps de séjour suffisant pour réaliser les réactions chimiques. Cette zone de réaction prend également en compte l'augmentation du flux gazeux résultant de ces transformations. La zone de mélange et la zone réactionnelle sont de préférence des objets de dimensions réduites. Une paroi refroidie peut en outre garantir une très faible inertie au procédé, et donc des conditions de sécurité améliorées.

La paroi de la zone de réaction et/ou de la zone de mélange peut comporter, ou être constituée en, un matériau métallique réfractaire.

La zone de mélange comporte, comme déjà expliqué, une enceinte de forme spécifique, et notamment sphérique ou ovoide, particulièrement adaptées pour minimiser le volume de la zone de mélange et donc les échanges thermiques avec l'extérieur.

La sortie de la zone de réaction peut être équipée de moyens, par exemple une tuyère, induisant une détente pour le figeage des gaz de synthèse.

Un dispositif selon l'invention comporte avantageusement au moins une ou deux source(s) à plasma, disposées de manière à orienter l'écoulement d'un mélange matière à traiter - plasma vers la zone de réaction.

Un dispositif selon l'un des modes de réalisation ci-dessus peut comporter en outre des moyens pour alimenter au moins une source plasma avec au moins en partie au moins un gaz provenant de la gazéification (recyclage des gaz).

Des moyens peuvent être prévus pour refroidir la zone de mélange et/ou la zone de réaction.

La zone de mélange et/ou la zone de réaction peut être en outre revêtue avec un matériau constituant une couche protectrice, par exemple un réfractaire.

Des moyens de purification et/ou de nettoyage du gaz de synthèse peuvent être disposés en sortie de zone de réaction.

Les moyens de purification et/ou de nettoyage peuvent comporter une zone de prétrempe.

Ces moyens peuvent comporter des moyens pour capter des matières condensables.

Selon un mode de réalisation, un dispositif de gazéification de matière selon l'invention peut comporter un premier et au moins un deuxième dispositif de gazéification, disposés de manière étagée, l'un au moins de ces dispositifs étant un dispositif selon l'invention.

L'invention concerne également un procédé de gazéification de matière selon la revendication 8. Une température peut être mesurée dans la zone de réaction. En fonction de cette température dans la zone de réaction, il est possible de contrôler une injection, dans la zone de mélange, d'un produit pour former une couche de protection de la paroi intérieure de la zone de mélange et de réaction

La matière à traiter peut être au moins en partie solide, et/ou liquide et/ou gazeuse. C'est par exemple de la biomasse solide, et/ou des déchets organiques et/ou un résidu liquide, et/ou un gaz. Cette matière peut provenir au moins en partie d'un traitement de pyrolyse et/ou de gazéification, par exemple selon l'invention ou issus d'autres types de procédés connus.

Le ou les dard(s) plasma peuvent être formé(s) par au moins une torche à arc non transféré.

Au moins une torche plasma peut être alimentée en partie par au moins un gaz obtenu par un procédé de gazéification, par exemple un procédé selon l'invention.

Le produit pour former une couche de protection de la paroi intérieure de la zone de mélange comporte par exemple un oxyde ou un carbure.

La réaction est initiée dans la zone de mélange et est favorisée par la dissociation des gaz plasmagènes.

Au moins deux dards plasma peuvent être utilisés, de manière à diriger le mélange matière - plasma vers la zone de réaction.

La température moyenne en sortie de la zone de mélange peut être comprise entre 1000°C et 2000°C, avec localement des températures au sein du dard pouvant être comprises, par exemple, entre 3000 K et 8000 K. La température dans la zone de réaction se situe également entre 1000°C et 2000°C.

Une gazéification selon l'invention peut être réalisée avec l'addition d'un gaz réactant comportant de l'air, et/ou de l'oxygène, et/ou de la vapeur d'eau, et/ou du dioxyde de carbone, et/ou du méthane ou une combinaison de ces différentes espèces.

Diverses adaptations sont donc possibles quant aux divers modes de fonctionnement d'un dispositif selon l'invention.

Un dispositif et un procédé selon l'invention permettent de doubler (par rapport à un procédé classique de type FICFB) la production d'hydrogène et de monoxyde de carbone grâce à un appoint externe de puissance électrique. Cette technique évite en outre la formation de dioxyde de carbone et de vapeur d'eau liée à une gazéification à l'oxygène.

L'invention permet la production d'un produit gazeux à partir de biomasse et/ou de déchets organiques, ledit produit ayant une concentration en polluants organiques (notamment en goudrons) inférieure à 1 mg/Nm3, et même inférieure à 0,5 mg/Nm3 ou 0,1 mg/Nm3. Une telle pureté permet une utilisation en vue d'une synthèse, notamment une synthèse de carburant.

### BRÈVE DESCRIPTION DES DESSINS

- la figure 1 représente un dispositif selon l'invention,
- les figures 2A et 2B représentent des variantes d'une zone réactionnelle 'un dispositif selon l'invention,
- la figure 3 représente un autre dispositif selon l'invention, en configuration non symétrique,
- la figure 4 représente un autre dispositif selon l'invention, en configuration étagée.

### EXPOSÉ DÉTAILLÉ DE MODES DE RÉALISATION PARTICULIERS

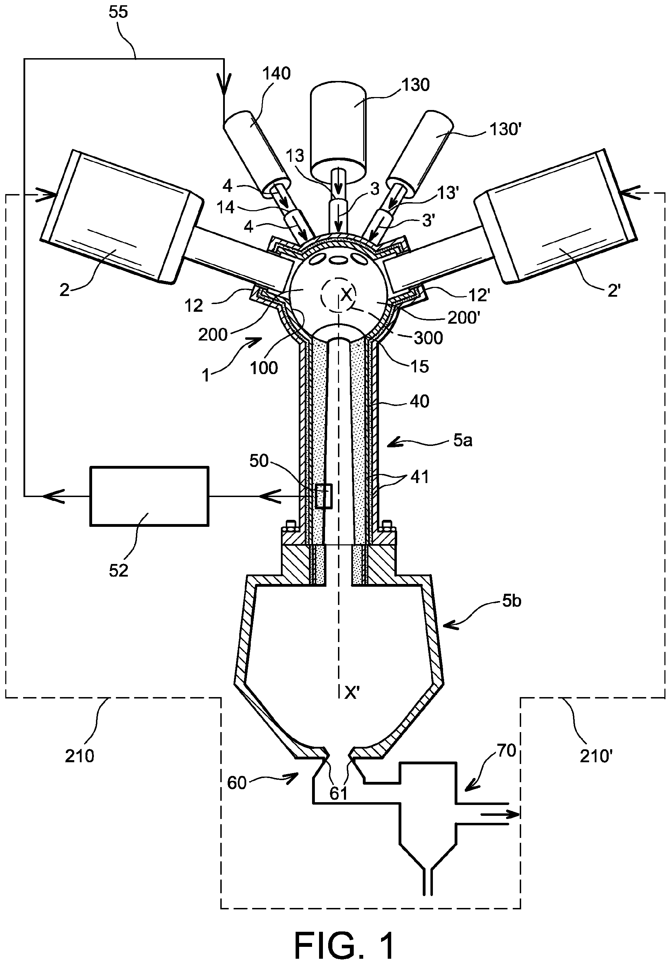

Un premier mode de réalisation de l'invention va être décrit en liaison avec la figure 1.

Un dispositif selon l'invention comporte un premier sous-ensemble 1, ou des premiers moyens, formant une zone de mélange d'une matière à traiter 3, 3' avec le ou les flux (ou dards 200, 200') d'un ou de plusieurs dispositifs 2, 2' générateurs de plasma.

La matière à traiter peut être solide, ou liquide ou gazeuse. C'est, par exemple, de la biomasse solide finement divisée et/ou un produit de pyrolyse, et/ou des déchets organiques et/ou un résidu liquide, et/ou encore un gaz. Cette matière (notamment dans le cas d'un gaz) peut, au moins en partie, provenir, ou être un sous produit, d'un traitement de la matière à traiter. C'est le cas d'un recyclage de gaz pour alimenter les générateurs plasma 2 et 2' que symbolisent les flèches 210 et 210' de la figure 1. Le recyclage de gaz peut également provenir d'une étape aval au présent procédé (cas d'un recyclage de gaz de tête issus d'une opération de Fischer-Tropsch par exemple).

Des ouvertures 13, 13' permettent d'injecter le flux de matière à traiter à l'aide de moyens d'injection 130, 130'. On tiendra compte de leur tenue en température et de leur aptitude à délivrer un flux maîtrisé, à une pression adaptée aux conditions imposées dans le dispositif. A titre d'exemple, ces moyens d'injection peuvent comporter, dans le cas d'une alimentation en liquide, un nébuliseur ou une extrémité de tuyau droite permettant une mise sous pression. Par exemple encore, pour le cas de solide à valoriser, il est possible d'utiliser des moyens de transport pneumatique sous pression.

Les moyens d'injection permettent la réalisation de trajectoires d'injection de la matière à traiter, ces trajectoires étant linéaires, ou en vortex, ou hélicoïdales ou de trajectoires d'injection de cette matière résultant d'une combinaison de mouvements linéaire et rotatif.

Une ou plusieurs torches à plasma 2, 2' préférentiellement à arc soufflé, sont disposées autour de l'enceinte de manière à pouvoir injecter un plasma dans cette dernière.

Une telle torche fonctionne de préférence soit avec un gaz issu directement (après éventuel traitement et/ou reconditionnement) d'un traitement selon la présente invention et/ou avec un gaz issu d'un procédé aval couplé à celle-ci (recyclage). On peut également utiliser, éventuellement en combinaison avec les précédents gaz, un réactant (H₂O, et/ou CO₂, et/ou O₂ et/ou air notamment) choisi de telle sorte qu'un compromis satisfaisant soit trouvé entre les différents critères d'acceptabilité relatifs à la composition du gaz généré par la présente invention (rapport H₂/CO, volume de gaz recyclé), et la rentabilité du procédé (liée notamment au bilan matière et au bilan énergétique).

En particulier, à titre d'exemple, l'alimentation d'au moins une des torches peut être réalisée à l'aide d'une faible partie du débit de gaz de synthèse, obtenu par le traitement selon l'invention (ce qui est symbolisé par les flèches 210, 210' en traits interrompus), en sortie du dispositif ou encore par un gaz dit « de tête » issu de la réaction Fischer - Tropsch (composé notamment de méthane). On peut également choisir de l'eau, sous forme vapeur ou directement liquide, selon l'acceptabilité des torches.

De préférence, la ou les torche (s) 2, 2' est/sont de type à arc non transféré. Ce type de torche ne nécessite en effet pas de contre électrode externe à la torche et peut donc être remplacé sans intervention à l'intérieur du sous-ensemble de mélange. La température au droit du dard plasma est de l'ordre de plusieurs milliers de °C (2000°C à 3000°C ou plus).

La ou les sources plasma, et un ou plusieurs injecteurs, peuvent être disposés de manière à orienter l'écoulement d'un mélange matière à traiter - plasma vers la zone de réaction.

L'utilisation de plusieurs torches permet d'atteindre une puissance accrue au sein du dispositif et/ou de bénéficier d'une symétrie par rapport à un axe XX' d'une zone réactionnelle 5a, 5b disposée en aval de la zone de mélange. Cette zone réactionnelle permet d'assurer un temps de séjour suffisant à la charge à valoriser pour atteindre le niveau de conversion attendu. Une telle symétrie permet de maîtriser la complexité des phénomènes de mélange et minimise l'impact thermique des écoulements plasma sur les parois. Elle permet éventuellement de simplifier les paramètres d'entrée conduisant à l'optimisation du mélange gaz plasmagènes/flux à traiter. La dissymétrie du système n'est cependant pas à proscrire puisqu'elle contribue à l'homogénéisation des écoulements.

Les moyens 1 et la disposition des sources plasma permettent également de réorienter l'écoulement plasma délivré par la (les) torche(s) de telle sorte que le mélange gaz plasmagène-matière à traiter suive globalement, en sortie du sous-ensemble d'injection, l'axe longitudinal XX' de la zone réactionnelle 5a, 5b.

La symétrie permet par ailleurs de limiter des dissymétries d'usure, c'est-à-dire une répartition inégale des phénomènes de corrosion et/ou d'usure des parois intérieures de la zone 1 soumises au flux de gaz plasmagènes.

Afin de permettre un fonctionnement continu optimisé, il est possible de réaliser un dispositif apte à recevoir plusieurs torches, et des moyens d'isolement permettant d'isoler l'une des entrées 12, 12'. Cette configuration permet la maintenance d'une torche tout en autorisant parallèlement le fonctionnement des autres torches débouchant au sein du sous-ensemble de mélange 1.

La zone 1 de mélange débouche, en aval, dans une première partie 5a de la zone réactionnelle.

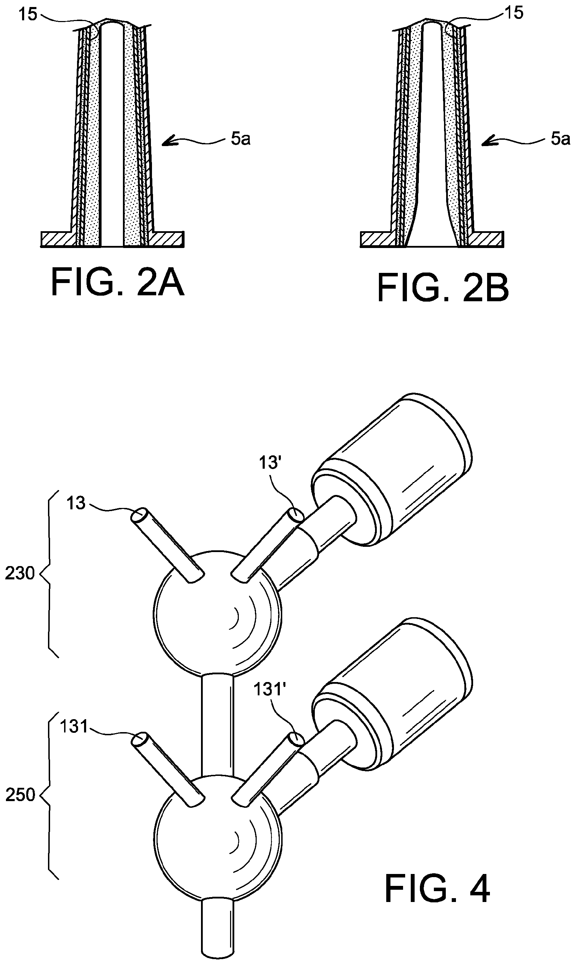

Une sortie 15 de la zone de mélange conduit à cette zone réactionnelle 5a, qui présente un axe XX' qui peut être par exemple celui issu du flux plasma résultant communément de la confluence des dards plasma 200, 200' des torches (cas où plusieurs torches sont utilisées). Dans d'autres modes de réalisation, cet axe XX' peut s'écarter de celui du(des) dispositif(s) d'alimentation du flux à traiter : c'est en particulier le cas pour la configuration n'utilisant qu'une torche plasma, comme illustré par exemple sur la figure 2.

Des moyens 50, par exemple de type pyromètre permettent de capter ou mesurer une température dans cette zone 5a de réaction.

Cette mesure de température est utilisée, par exemple sous contrôle d'un dispositif électronique ou d'un microordinateur 52 programmé à cet effet, pour contrôler des moyens 140 d'injection, dans la zone de mélange 1, d'un produit 4, par exemple un oxyde (tel que notamment, à titre d'exemple, MgO, et/ou FeO, et/ou CaO, et/ou Al203 et/ou Si02) pour former une couche de protection de la paroi intérieure de la zone de mélange 1 et de la zone réactionnelle 5a en fonction de la température dans la zone de réaction 5a. La flèche 55 symbolise ce contrôle.

Ce contrôle peut être utilisé, notamment en cas de fluctuation de débit ou de la nature de la charge à traiter, ou encore en cas d'inadéquation entre les températures de fusion des cendres constitutives de la charge à valoriser et la température visée au sein du dispositif. L'adaptation de la puissance électrique appliquée au droit du dispositif peut être un autre moyen de contrôle.

En l'absence de cette injection, un dépôt naturel peut se former sur les parois internes du dispositif, notamment dans le cas de charges renfermant des cendres.

Une diminution de température, dans cette zone 5a, induit une augmentation de l'épaisseur du dépôt sur la paroi interne des sous-ensembles 1 et 5a, 5b (mais également 60). Le dépôt ainsi constitué va induire une diminution des pertes thermiques à la paroi. Cette diminution va alors à son tour entraîner une diminution de l'épaisseur du dépôt sachant que la température de fusion de ce dernier est fixée pour une même composition.

Afin de s'affranchir de cette corrélation, il peut être avantageux d'injecter selon le mode et le pilotage décrit précédemment un produit pour adapter la température de fusion du dépôt. Ce dépôt permet d'augmenter l'isolation de la zone ou de l'enceinte 1 et de la zone 5a, 5b et d'éviter des pertes thermiques.

La couche de protection des parois intérieures des zones 1 et 5a, 5b permet également une protection contre la corrosion.

Les moyens 1 peuvent avoir, comme illustré sur la figure 1, la forme d'une enceinte équipée d'interfaces ou d'ouvertures ou d'orifices 12, 12', 13, 13', 14, cette forme permettant de confiner le flux de matière à traiter et un ou plusieurs flux plasma 200, 200' délivré par une ou plusieurs torches 2, 2'.

Les moyens ou l'enceinte 1 permet, afin d'homogénéiser l'alimentation en matière 3, 3' de réaliser un contact optimal entre le flux de matière à traiter et le ou les dards 200, 200' des plasmas. Notamment, la forme de l'enceinte permet de garantir une mise en contact la plus intime possible, dans le volume des dards 200, 200' générés par les torches plasma, de la matière 3, 3' à traiter et/ou à valoriser. Ce contact intime résulte notamment d'une injection forcée de la matière à traiter, qui est dirigée vers ou dans le ou les dards 200, 200' des plasmas. On assure ainsi une injection dans une chambre de mélange, imposant une trajectoire de la matière dans le milieu ionisée généré par la torche (dont les caractéristiques de température et de composition, et de conductivité thermique (non homogènes axialement et radialement) en font un milieu très réactif).

Les moyens 1 permettent aussi d'homogénéiser le mélange gaz plasmagène/matériau à traiter du fait de turbulences générées par l'écoulement de gaz plasmagène (dards 200, 200') au travers de la suspension de matière à traiter et par la confluence du dard ou des dards plasma 200, 200' avec cette matière.

Par ailleurs, cette homogénéisation est renforcée par une augmentation de la section de passage (entre la section de la (les) torche(s)) et celle du sous-ensemble d'injection) permettant l'homogénéisation des gradients de vitesse d'écoulement du gaz plasmagène.

Le flux de matière à traiter 3, 3' et le ou les flux du ou des dards plasma 200, 200' se rencontrent en une même zone de confluence 300 de sorte que le mélange de ces deux flux est forcé. Il en résulte en outre une initiation de la réaction dans la chambre plasma 1, avant que le mélange réalisé n'entre dans la zone ou le sous-ensemble réactionnel 5a, 5b situé en aval.

La cinétique de décomposition de la matière en milieu plasma peut être caractérisée ou suivie par des moyens optiques. De tels moyens permettent par exemple de rendre compte de la densité de particules dans le milieu plasma.

De préférence, l'enceinte permet en outre de supporter d'éventuelles variations de flux thermique. De telles variations peuvent apparaître sur la paroi interne de l'enceinte, et peuvent être dues à une éventuelle hétérogénéité et/ou discontinuité de l'alimentation du flux de matière à traiter ou à un arrêt volontaire du système ou à son redémarrage. Un tel arrêt volontaire devrait avoir une cinétique plutôt rapide, afin de minimiser le temps d'indisponibilité de l'ensemble du dispositif (temps d'indisponibilité annuel de préférence inférieur à 10%). Un arrêt d'une ou de plusieurs des torches à plasma 2, 2' peut aussi se produire, par exemple en cas de maintenance tournante sur les systèmes de chauffe. L'enceinte est donc de préférence en un matériau supportant les variations de flux thermiques attendues sur sa surface intérieure 100. Elle est par exemple en un matériau métallique réfractaire, tel qu'un acier réfractaire refroidi. Une enceinte en matériau réfractaire classique, de type brique ou béton aurait un coût de revient trop élevé (du fait de la nécessité de remplacement périodique) et une inertie thermique trop importante, et il ne serait pas possible d'arrêter ou de redémarrer rapidement le système.

L'enceinte 1 peut être munie de moyens de refroidissement. Ces moyens sont de préférence disposés autour de l'enceinte. Ils comportent par exemple une double enveloppe 40 avec circulation d'un fluide de refroidissement 41, par exemple de l'eau pressurisée.

Comme on le verra plus loin, ces moyens de refroidissement peuvent être également utilisés pour refroidir la zone réactionnelle, et notamment la partie 5a de cette zone.

Au besoin, cette structure peut être avantageusement gainée par un matériau réfractaire complémentaire (par exemple du carbure de silicium SiC) mais selon une épaisseur restreinte du fait de la présence, lors du fonctionnement du système, de dépôt protégeant la paroi. Cette gaine complémentaire permet d'encaisser ou d'absorber une éventuelle variation thermique plus ou moins importante et soudaine.

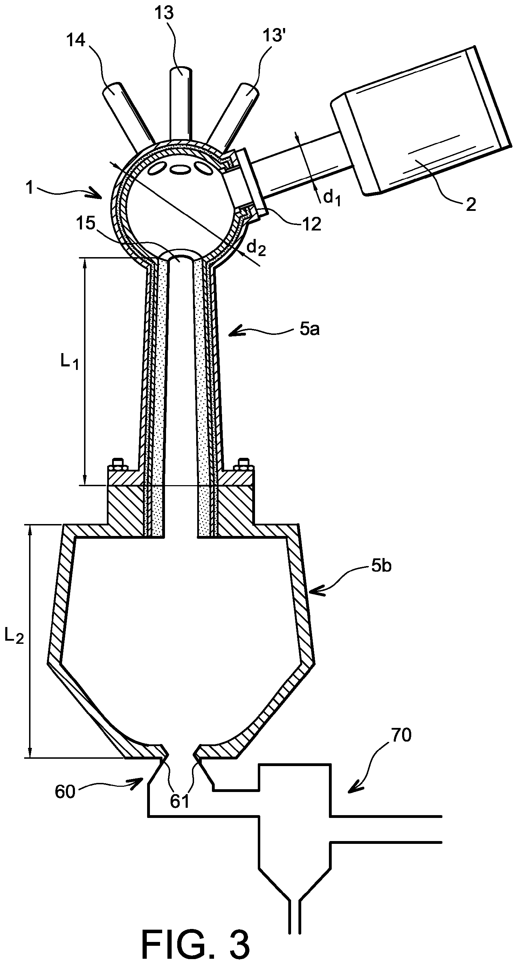

La surface d'échange entre l'intérieur de l'enceinte et l'atmosphère environnante, surface à laquelle la perte thermique est proportionnelle, est de préférence la plus petite possible ou du moins choisie telle que les pertes thermiques du dispositif (englobant les pertes au droit de l'enceinte 1) ne soient pas supérieures à 15% (voire même 10%) de la puissance injectée. Une forme sphérique (cas de la figure 1) ou ovoide est, de ce point de vue, optimale. Comme indiqué ci-dessous, et en liaison avec la figure 3, le diamètre ou la dimension maximale de cette sphère ou de cette forme ovoide peut être par exemple de l'ordre de quelques centaines de mm, par exemple compris entre 200 mm et 400 mm ou 500 mm pour une puissance de l'ordre de quelques mégawatts.

La présente invention peut fonctionner sous pression. Ceci permet de diminuer le volume de l'enceinte 1 (un tel volume réalisable ou compatible avec une utilisation industrielle peut être calculé à partir des indications de diamètre données ci-dessus), et donc ses pertes thermiques, mais également d'économiser une éventuelle étape de compression dans le cas d'un couplage avec un procédé aval devant mettre en oeuvre un gaz de synthèse sous pression (par exemple pour un procédé de synthèse Fisher Tropsh fonctionnant à une pression de 30 bars environ).

Les moyens d'alimentation sont de préférence implantés sur les divers orifices d'injection 12, 12', 13, 13', 14 de l'enceinte de telle sorte que l'angle d'incidence du flux à traiter avec l'écoulement plasma délivré par la torche (ou bien l'écoulement global résultant de l'utilisation de plusieurs torches) puisse maximiser le ou les performances du sous-ensemble. En particulier, à titre d'exemple, une configuration possible est celle présentée en figure 1 : les dispositifs d'alimentation et les torches sont situés dans le même plan et les angles entre systèmes d'alimentation et torches sont tous voisins de 30°.

L'ouverture 14, débouchant elle aussi dans le sous-ensemble de mélange 1, permet de positionner les moyens 140 permettant d'incorporer à la charge à traiter un composé (ou un mélange de composés) présentant des propriétés physico-chimiques assurant la formation d'un film (ou d'une couche) protecteur, sur la paroi interne ou du sous ensemble d'injection, et sur la paroi interne du sous-ensemble réactionnel (partie 5a et/ou 5b). Ces moyens 140 peuvent être pilotés, comme déjà expliqué ci-dessus, à l'aide d'une consigne d'asservissement basée sur la température du sous-ensemble ou du milieu réactionnel 5a. Cet ajout d'un tel composé est particulièrement adapté au cas où les caractéristiques de la charge ne permettent pas son traitement dans des conditions satisfaisantes, par exemple dans la mesure où les cendres constitutives du flux à traiter ne possèdent pas une température de fusion suffisamment proche de celle devant être imposée au sein du gazéifieur.

Les moyens réactionnels 5a, 5b, ou la zone réactionnelle, sont directement attenants à la zone de mélange 1. La sortie 15 de cette dernière zone aboutit directement à l'entrée de cette zone réactionnelle 5a comme indiqué sur la figure 1.

Comme expliqué ci-dessus, la réaction peut déjà être initiée dans la zone 1. Mais l'essentiel de la réaction matière - plasma a lieu dans cette deuxième zone 5a, 5b, dans laquelle la matière séjourne plus longtemps que dans cette même zone 1. Autrement dit cette zone permet principalement de parfaire la conversion du flux à traiter, débutée dans le sous-ensemble 1 de mélange. Pour cela, un deuxième volume réactionnel 5b, de préférence significativement supérieur à celui de la première zone réactionnelle 5a (par exemple de l'ordre de 10ⁿ fois plus grand, avec n supérieur ou égal à 1) peut être accolé au premier volume 5a. Ce deuxième volume permet de prolonger la zone réactionnelle et donc le temps de séjour souhaité.

Selon la nature du flux de matière à traiter ou à valoriser, ce sous-ensemble réactionnel ou cette zone réactionnelle 5a, 5b peut prendre plusieurs formes. Elle peut par exemple comporter :
- un réacteur à flux entraîné,
- ou un réacteur auto-creuset,
- ou un réacteur cyclonique.

On utilise de préférence le moins possible de matériaux réfractaires traditionnels pour ce sous-ensemble réactionnel, et plutôt un matériau métallique réfractaire. Cette zone réactionnelle peut être refroidie pour permettre la formation de dépôts de résidus issus du traitement de la charge à traiter et préserver le matériau métallique réfractaire protégé. Une couche ou une croûte solide résultant de ces dépôts constitue une épaisseur de protection thermique et également de protection vis à vis de la corrosion. Le refroidissement peut être assuré par la double enveloppe 40, 41 et la circulation de fluide 42 déjà mentionnée ci-dessus pour la zone 1.

Il est intéressant de noter qu'un refroidissement de la zone réactionnelle 5a, 5b devrait en principe entraîner des pertes thermiques importantes. En fait, le refroidissement agit d'abord comme un moyen pour former, à partir des fondants de la matière à traiter, une couche ou une croûte de protection qui, comme indiqué ci-dessus, réalise tant une isolation thermique qu'une protection contre la corrosion.

Ce mécanisme limite sensiblement l'utilisation de matières réfractaires dont la quantité serait plus importante sans l'exploitation de ce phénomène de dépôt.

La partie 5a de la zone réactionnelle peut avoir une forme divergente, comme illustré sur les figures 2A et 2B. La partie divergente permet de prendre en compte l'augmentation de volume de gaz produits lors de la conversion de la charge à traiter.

Optionnellement, des moyens de trempe permettent, selon l'objectif visé et la nature du flux à traiter, d'épurer le gaz de synthèse de sa fraction inorganique et de figer sa composition. Ces moyens ou ce sous - système 60 de trempe sont/est situé (s) en amont d'éléments 70 complémentaires à la présente invention, permettant la purification et/ou le nettoyage du gaz généré par le dispositif faisant objet de la présente invention.

Les moyens 60 comportent par exemple un élément de type tuyère divergente 61 ou encore un système de « quench » spécifique (comme celui décrit dans le brevet US 6613127), incorporant, ou non, un système de nébulisation afin de capter les matières condensables (les cendres notamment). Un séparateur inertiel 70 permet la purification et/ou le nettoyage du gaz généré.

Une variante de l'invention, en configuration asymétrique simplifiée, à une torche, est illustrée sur la figure 3. Des références identiques à celles de la figure 1 y désignent des éléments identiques ou similaires à ceux de cette figure 1. Sur cette figure 3, les autres éléments (moyens d'alimentation 130, 130' en matière à traiter, moyens d'alimentation 140 en composés permettant de former un film protecteur, boucle 210, 210', moyens de mesure de température 50, boucle de rétroaction 55..etc) de la figure 1 ne sont pas représentés mais font partie de ce mode de réalisation.

Les dimensions indiquées sur cette figure sont données ci-dessous à titre indicatif pour une puissance développée de l'ordre de 500 kW :
- d₁ est compris entre 150 et 200 mm,
- d₂ est compris entre 300 et 400 mm,
- L₁ est compris entre 500 mm et 3000 mm,
- L₂ est compris entre 1000 mm et 5000 mm,

Le débit volumique de la torche est de préférence le plus faible possible (pour tout de même assurer une puissance de chauffe suffisante tout en limitant la mise en oeuvre d'important volume de gaz). A titre indicatif, ce débit peut être par exemple de l'ordre d'une valeur cible inférieure à 100 Nm3/h. Comme déjà indiqué ci-dessus, ce débit pourra avantageusement être constitué du gaz produit par le dispositif (recyclage).

Pour cette puissance, le dispositif est apte à convertir des débits de biomasse (normés sur base sèche) de l'ordre de 200 kg/h.

Pour une puissance de torche de plusieurs MW, par exemple supérieure à 2 MW ou à 5 MW ou même à 10 MW, on peut traiter plusieurs tonnes par heure de matière, par exemple 5 tonnes/heures ou plus, par exemple 10 tonnes/h ou encore plus. Les dimensions du dispositif sont adaptées à partir des indications données ci-dessus.

Pour le post-traitement de gaz issus d'un premier étage de gazéification classique (procédé autothermique classique, de type FICFB), la puissance à appliquer est de l'ordre de 1 MW par tonne de gaz à traiter.

A titre indicatif, la température moyenne au sein du sous-ensemble fonctionnel pourra être voisine de 1300-1500°C pour un dard plasma de température voisine de 5000-7000 K environ.

Les dimensions d'un dispositif symétrique à deux torches, tel qu'illustré sur la figure 1, pourront à titre indicatif être de l'ordre de celles mentionnées pour la version asymétrique (figure 3). Le nombre de torches influence principalement la puissance développée par le dispositif, dans la mesure où, ici, une seule torche supplémentaire vient équiper le sous-ensemble de mélange. Plus généralement, le nombre de torches peut-être adapté aux besoins des procédés (puissance à développer, gestion d'encombrement et de maintenance, ...). Pour un nombre de torches plus important que pour les cas mentionnés dans les exemples de réalisation, les ordres de grandeurs des cotations précitées sont à recalculer en prenant notamment en compte la puissance unitaire des torches et les contraintes de flux massiques et thermiques.

D'autres variantes et configurations sont possibles. Par exemple, il est possible de réaliser avantageusement, selon les contraintes spécifiques liées au procédé, des empilements monotorche ou multitorches, à mono ou multi-alimentation étagée, à 2 ou 3 ou plus de 3 étages.

La figure 4 représente un ensemble mono torche à multi-alimentation étagée.

Cet ensemble comporte en fait deux étages 230, 250, chacun réalisé selon l'un des modes de réalisation de la présente invention. On peut aussi avoir un dispositif comportant un étage selon l'art antérieur et, en aval, un étage selon la présente invention. Un tel ensemble permet d'accroître la capacité de traitement de la matière à traiter. En outre le deuxième étage 250 permet de finaliser une conversion ou un traitement qui n'aurait pas ou l'être par le premier étage 230. Chaque étage comporte des ouvertures 13, 13', 131, 131' en matière à traiter. Les autres éléments des figures 1 ou 3 ne sont pas représentés sur cette figure 4, mais chaque étage 230, 250 peut avoir la configuration de la figure 1 ou 3.

Par ailleurs, le nombre de torches par sous ensemble de mélange n'est principalement limité que par l'encombrement de celles-ci au droit du sous ensemble, permettant ainsi d'atteindre des puissances relativement importantes. A titre indicatif, il est possible d'utiliser des torches ayant chacune une puissance voisine de 2 MW ou plus (par exemple de l'ordre de 10 ou 15 MW).

L'invention permet la transformation de la biomasse et/ou des déchets organiques sous conditions de haute température (à titre indicatif entre 1200 et 1500°C moyenné au coeur du dispositif ou de la zone de gazéification 5) afin de minimiser les écarts vis à vis de l'équilibre thermodynamique. La transformation est réalisée avec un agent de gazéification (dit aussi réactant), introduit par les ouvertures 3, et/ou 3' et/ou 4, ou introduit comme gaz plasmagène des torches 2,2'. Cet agent peut être de l'air, ou de l'oxygène, ou de la vapeur d'eau, ou du dioxyde de carbone, ou une combinaison de ces différentes espèces, de préférence dans des proportions permettant de garantir une atmosphère globalement réductrice au sein du dispositif de gazéification.

Il est possible d'estimer le gain d'un procédé allothermique selon l'invention, par rapport au procédé autothermique classique, dans le cas particulier de la gazéification de la biomasse à des fins de production de carburant de synthèse via Fischer Tropsch. Deux configurations allothermiques peuvent être considérées selon qu'une adjonction d'hydrogène (afin d'ajuster le rapport molaire H2/CO) est assurée ou non au droit du dispositif, en aval.

Le tableau I recense les rendements matières attendus (rapport de la masse de carburant diesel sur la masse de biomasse sèche nécessaire pour produire ce carburant) selon les voies de valorisation retenues.

Il compare le bilan matière (équivalent pétrole produit par rapport à la quantité de biomasse sèche entrant dans le procédé) en terme d'ordre de grandeur pour différentes configurations de procédé de gazéification de la biomasse. Ce tableau fait apparaître le gain apporté par le procédé allothermique selon l'invention.

Les différents procédés [1] - [4] utilisés pour les comparaisons et mentionnés dans le tableau I sont les suivants :
[1] : procédé de type FICFB ou Choren,
[2] : procédé [1] complété d'un étage de post-traitement selon la présente invention, travaillant sur le gaz généré lors de la première étape,
[3] : procédé selon la présente invention et dont l'intrant est directement de la biomasse,
[4] : procédé [3] au droit duquel est introduit un flux d'hydrogène complémentaire afin de permettre l'optimisation de la quantité H2+CO pour un rapport molaire H2/CO voisin de 2.

Les valeurs du tableau I sont données (pour le cas [3] du tableau 1 sur la base d'un besoin moyen d'un tiers du PCI (pouvoir calorifique inférieur, par exemple de 15 à 20 MJ/kg) de la biomasse pour la gazéifier en CO et H2, cette énergie provenant de la biomasse elle-même (ce qui obère d'autant le rendement matière) ou d'une source extérieure (voie allothermique). Pour pouvoir réaliser une synthèse de carburant, le rapport molaire H2/CO est voisin de 2 ce qui induit un ajustement par « gas-shift » ou apport d'hydrogène extérieur au système initial.

**Tableau I**

| Procédé autothermique classique [1] | Procédé allothermique étagé [2] | Procédé allothemique direct, selon l'invention [3] | Procédé allothermiqueselon l'invention, avec adjonction d'hydrogène [4] |
|---|---|---|---|
| 15 % | 20 % | 30 % | 45 % |

L'invention permet la production d'un produit gazeux ayant une concentration en polluants organiques (notamment en goudrons) inférieure à 1 mg/Nm3, et même inférieure à 0,5 mg/Nm3 ou 0,1 mg/Nm3. Ce dernier niveau de pureté permet une utilisation en vue d'une synthèse, notamment une synthèse de carburant ou de méthanol.

Enfin, la présente invention permet de travailler à haute température, ce qui évite la formation de dioxines, notamment dans le cas du traitement des déchets.

Un dispositif selon l'invention permet de travailler avec très peu de matériau réfractaire, mais avec cependant peu de pertes (moins de 20% ou de 15% ou de 10%).

L'invention permet notamment la production d'un gaz de synthèse de haute qualité, comportant très peu d'impuretés et riche en hydrogène et en monoxyde de carbone.

## Revendications

1. Dispositif de gazéification par un plasma thermique de matière pour la génération d'un gaz de synthèse de haute qualité comportant :
- une enceinte (1) de mélange d'un plasma et de matière à traiter, comportant des ouvertures (12, 12', 13, 13') pour positionner des moyens d'injection d'un flux de ladite matière et pour positionner au moins une source plasma, cette enceinte formant une zone de mélange et ayant une forme sphérique, ou ovoide, permettant une injection forcée d'une matière à traiter dans un dard d'au moins un plasma et la réalisation d'un mélange homogène d'un flux de ladite matière et dudit dard plasma (200, 200'),
- une zone de réaction (5a, 5b), d'un mélange de ladite matière et du plasma, en communication avec une ouverture de l'enceinte et s'étendant de manière axiale.

2. Dispositif selon la revendication 1, comportant en outre :
- des moyens (50) pour mesurer une température dans la zone de réaction,
- des moyens (52, 140) pour contrôler, dans la zone de mélange (1), l'injection d'au moins un produit (4) permettant de former une couche de protection de la paroi intérieure de la zone (1) de mélange et de la zone de réaction (5a, 5b) en fonction de la température mesurée dans la zone de réaction.

3. Dispositif selon la revendication 1 ou 2, la zone de réaction ayant une forme divergente et/ou étant équipée en sortie par de moyens (60, 61) induisant une détente pour le figeage du gaz de synthèse, ces moyens comportant par exemple une zone de prétrempe.

4. Dispositif selon l'une des revendications 1 à 3, la paroi intérieure de la zone de réaction et/ou de la zone de mélange (1) étant en un matériau métallique réfractaire recouvert avantageusement d'une protection.

5. Dispositif selon l'une des revendications 1 à 4, comportant en outre des moyens d'injection (130, 130') de la matière à traiter permettant la réalisation de trajectoires d'injection de la matière à traiter linéaires, ou en vortex, ou hélicoïdales ou de trajectoires d'injection de cette matière résultant d'une combinaison de mouvements linéaire et rotatif.

6. Dispositif selon l'une des revendications 1 à 5, comportant en outre au moins une source à plasma (2, 2'), de type à arc non transféré et/ou transféré et/ou comportant au moins deux sources à plasma, disposées de manière à orienter l'écoulement d'un mélange matière à traiter - plasma vers la zone de réaction et/ou un ou plusieurs injecteurs respectivement disposés de manière à orienter l'écoulement d'un mélange matière à traiter - plasma vers la zone de réaction.

7. Dispositif selon l'une des revendications 1 à 6, comportant en outre des moyens (210, 210') pour alimenter au moins une source à plasma avec au moins en partie au moins un gaz provenant de la gazéification.

8. Procédé de gazéification de matière (3), mettant en oeuvre un dispositif selon l'une des revendications 1 à 7, -comportant :
- l'injection forcée de ladite matière (3) dans au moins un dard plasma (200, 200') dans la zone de mélange (1) de forme sphérique, ou ovoide, dans laquelle ladite matière et le flux dudit dard plasma se rencontrent et se mélangent de manière homogène,
- l'initiation, dans la zone de mélange (1), d'une réaction de ladite matière et du plasma, puis la réalisation à proprement parler de cette réaction dans une zone de réaction (5a, 5b), disposée en aval de la zone de mélange.

9. Procédé selon la revendication 8, comportant en outre :
- la mesure d'une température dans la zone de réaction,
- le contrôle d'une injection, dans la zone de mélange, d'un produit pour former une couche de protection de la paroi intérieure de la zone de mélange en fonction de la température dans la zone de réaction.

10. Procédé selon la revendication 9, le produit pour former une couche de protection de la paroi intérieure de la zone de mélange comportant un oxyde.

11. Procédé selon l'une des revendications 8 à 10, la matière à traiter étant au moins en partie solide, et/ou liquide et/ou gazeuse et/ou étant de la biomasse solide, et/ou des déchets organiques et/ou un résidu liquide, et/ou un gaz et/ou provenant au moins en partie, d'un traitement d'une matière à traiter.

12. Procédé selon l'une des revendications 8 à 11, le ou les dard (s) plasma étant formé (s) par au moins une torche (2, 2') à arc non transféré et/ou alimentée en partie ou en totalité par au moins un gaz obtenu par un procédé de gazéification.

13. Procédé selon l'une des revendications 8 à 12, la réaction étant initiée dans la zone de mélange.

14. Procédé selon l'une des revendications 8 à 13, comportant l'injection d'au moins deux dards plasma, de manière à diriger le mélange matière - plasma vers la zone de réaction.

15. Procédé selon l'une des revendications 8 à 14, la gazéification étant réalisée avec un réactant comportant de l'air, et/ou de l'oxygène, et/ou de la vapeur d'eau, et/ou du dioxyde de carbone, ou une combinaison de ces différentes espèces.

## Patentansprüche

1. Vorrichtung zum Vergasen von Material durch ein thermisches Plasma zum Erzeugen eines hochwertigen Synthesegases, enthaltend:
- einen Mischraum (1) zum Vermischen von einem Plasma und einem zu bearbeitenden Material, umfassend Öffnungen (12, 12', 13, 13') zum Anordnen von Einleiteinrichtungen zum Einleiten eines Materialflusses und zum Anordnen von zumindest einer Plasmaquelle, wobei dieser Raum einen Mischbereich bildet und eine sphärische bzw. ovale Form hat, wodurch ein forciertes Einleiten eines zu bearbeitenden Materials in eine Lanze aus zumindest einem Plasma und die Bildung eines homogenen Gemisches von einem Materialfluss und der Plasmalanze (200, 200') möglich sind,
- einen Reaktionsbereich (5a, 5b) für ein Gemisch aus Material und Plasma, der in Kommunikation mit einer Öffnung des Raums steht und sich axial erstreckt.

2. Vorrichtung nach Anspruch 1, ferner enthaltend:
- Einrichtungen (50) zum Messen einer Temperatur in dem Reaktionsbereich,
- Einrichtungen (52, 140) gesteuerten Einleiten zumindest eines Mittels (4) in den Mischbereich (1), mit dem eine Schutzschicht der Innenwand des Mischbereichs (1) und des Reaktionsbereichs (5a, 5b) in Abhängigkeit von der in dem Reaktionsbereich gemessenen Temperatur gebildet werden kann.

3. Vorrichtung nach Anspruch 1 oder 2,
wobei der Reaktionsbereich eine divergierende Form hat und/oder am Ausgang mit Einrichtungen (60, 61) versehen ist, die eine Entspannung zum Erstarren von Synthesegas herbeiführen, wobei diese Einrichtungen beispielsweise einen Vorvergütungsbereich aufweisen.

4. Vorrichtung nach einem der Ansprüche 1 bis 3, wobei die Innenwand des Reaktionsbereichs und/oder des Mischbereichs (1) aus einem hitzebeständigen Metallmaterial besteht, das vorteilhaft mit einem Schutz überzogen ist.

5. Vorrichtung nach einem der Ansprüche 1 bis 4, ferner enthaltend Einrichtungen (130, 130') zum Einleiten von zu bearbeitendem Material, welche das Ausbilden von linearen oder wirbelartigen oder wendelförmigen Einleitbahnen zum Einleiten von zu bearbeitendem Material oder von Bahnen zur Materialeinleitung ermöglichen, die sich aus einer Kombination von linearer und drehender Bewegung ergibt.

6. Vorrichtung nach einem der Ansprüche 1 bis 5, ferner enthaltend zumindest eine Plasmaquelle (2, 2') vom Typ mit nicht übertragenem und/oder übertragenem Lichtbogen und/oder mit zumindest zwei Plasmaquellen, die so angeordnet sind, dass die Strömung eines Gemischs aus zu bearbeitendem Material und Plasma zum Reaktionsbereich gerichtet ist, und/oder einen oder mehrere Injektoren, die jeweils so angeordnet sind, dass die Strömung eines Gemisches aus zu bearbeitendem Material und Plasma zum Reaktionsbereich hin gerichtet ist.

7. Vorrichtung nach einem der Ansprüche 1 bis 6, ferner enthaltend Einrichtungen (210, 210') zum Versorgen zumindest einer Plasmaquelle mit zumindest teilweise zumindest einem Gas, das aus der Vergasung stammt.

8. Verfahren zum Vergasen von Material (3), bei dem eine Vorrichtung nach einem der Ansprüche 1 bis 7 eingesetzt wird, umfassend:
- forciertes Einleiten von Material (3) in zumindest einen Plasmalanze (200, 200') in dem Mischbereich (1) sphärischer oder ovaler Form, wobei das Material und der Fluss der Plasmalanze aufeinandertreffen und sich in homogener Weise vermischen,
- Auslösen einer Reaktion von Material und Plasma in dem Mischbereich (1), dann eigentliches Ausführen dieser Reaktion in einem Reaktionsbereich (5a, 5b), der dem Mischbereich nachgelagert ist.

9. Verfahren nach Anspruch 8, ferner umfassend:
- Messen einer Temperatur in dem Reaktionsbereich,
- gesteuertes Einleiten eines Mittels in den Mischbereich, um eine Schutzschicht zum Schutz der Innenwand des Mischbereichs in Abhängigkeit von der Temperatur im Reaktionsbereich zu bilden.

10. Verfahren nach Anspruch 9, wobei das Mittel zum Bilden einer Schutzschicht zum Schutz der Innenwand des Mischbereichs ein Oxid enthält.

11. Verfahren nach einem der Ansprüche 8 bis 10, wobei das zu bearbeitende Material zumindest teilweise fest und/oder flüssig und/oder gasförmig und/oder eine feste Biomasse und/oder organische Abfallstoffe und/oder ein flüssiger Rückstand und/oder ein Gas ist und/oder zumindest teilweise aus der Bearbeitung eines zu bearbeitenden Materials stammt.

12. Verfahren nach einem der Ansprüche 8 bis 11, wobei die Plasmalanze bzw. Plasmalanzen aus zumindest einem Lichtbogenbrenner (2, 2') gebildet ist, nicht übertragen und/oder teilweise oder vollständig mit zumindest einem aus einem Vergasungsverfahren gewonnenen Gas gespeist wird.

13. Verfahren nach einem der Ansprüche 8 bis 12, wobei die Reaktion in dem Mischbereich ausgelöst wird.

14. Verfahren nach einem der Ansprüche 8 bis 13, umfassend das Einleiten von zumindest zwei Plasmalanzen derart, dass das Gemisch aus Material und Plasma zum Reaktionsbereich gerichtet wird.

15. Verfahren nach einem der Ansprüche 8 bis 14, wobei die Vergasung mit einem Reaktanten erfolgt, der Luft und/oder Oxid und/oder Wasserdampf und/oder Kohlendioxid oder eine Kombination dieser verschiedenen Spezies enthält.

## Claims

1. Device for gasification, by a thermal plasma, of material in order to generate a high-quality synthetic gas, comprising:
- a chamber (1) for mixing a plasma and material to be treated, comprising openings (12, 12', 13, 13') for positioning means for injecting a flow of said material and for positioning at least one plasma source, this chamber forming a mixing zone and having a a spherical or ovoid shape allowing a forced injection of a material to be treated into the jet of at least one plasma and a homogenous mixture of a flow of said material and said plasma jet (200, 200'),
- a zone for reaction (5a, 5b), of a mixture of said material and the plasma, in communication with an opening of the chamber and extending axially.

2. Device according to claim 1, further comprising:
- means (50) for measuring a temperature in the reaction zone,
- means (52, 140) for controlling, in the mixing zone (1), the injection of at least one product (4) making it possible to form a protection layer of the internal wall of the mixing zone (1) and the reaction zone (5a, 5b) according to the temperature measured in the reaction zone.

3. Device according to claim 1 or 2, the reaction zone having a divergent shape and/or being equipped at the output with means (60, 61) creating a pressure release in order to fix the synthetic gas, for example a pre-soaking zone.

4. Device according to one of claims 1 to 3, the internal wall of the reaction zone and/or of the mixing zone (1) being made of a refractory metal material advantageously coated with a protection layer.

5. Device according to one of claims 1 to 4, further comprising means for injecting (130, 130') the material to be treated, making it possible to form injection trajectories of the material to be treated, which are linear, or in a vortex, or helical or material injection trajectories resulting from a combination of linear and rotary movements.

6. Device according to one of claims 1 to 5, further comprising at least one plasma source (2, 2'), of the non-transferred or transferred arc type, and/or comprising at least two plasma sources, arranged so as to direct the flow of a mixture of material to be treated and plasma toward the reaction zone and/or one or more injectors respectively arranged so as to direct the flow of a mixture of material to be treated and plasma toward the reaction zone.

7. Device according to one of claims 1 to 6, further comprising means (210, 210') for supplying at least one plasma source at least partially with at least one gas resulting from the gasification operation.

8. Process for gasification of material (3), implementing a device according to one of claims 1 to 7, comprising:
- the forced injection of said material (3) and at least one plasma jet (200, 200') into the mixing zone (1), having a spherical or ovoid shape, in which said material and the flow of said plasma jet meet and are mixed homogeneously,
- the initiation, in the mixing zone (1), of a reaction of said material and the plasma, then the actual maintenance of this reaction in a reaction zone (5a, 5b), placed downstream of the mixing zone.

9. Process according to claim 8, further comprising:
- the measurement of a temperature in the reaction zone,
- the control of an injection, in the mixing zone, of a product in order to form a protection layer of the internal wall of the mixing zone according to the temperature in the reaction zone.

10. Process according to claim 9, the product for forming a protection layer for the internal wall of the mixing zone comprising an oxide.

11. Process according to any of claims 8 to 10, the material to be treated being at least partially solid and/or liquid and/or gaseous and/or being solid biomass and/or organic waste and/or a liquid residue and/or a gas and/or coming at least partially from a treatment of a material to be treated.

12. Process according to one of claims 8 to 11, the plasma jet(s) being formed by at least one non-transferred arc torch (2, 2') and/or supplied at least partially or entirely by at least one gas obtained from a gasification process.

13. Process according to one of claims 8 to 12, the reaction zone being initiated in the mixing zone.

14. Process according to one of claims 8 to 13, comprising the injection of at least two plasma jets, so as to direct the mixture of material and plasma toward the reaction zone.

15. Process according to one of claims 8 to 14, the gasification operation being performed with a reactant comprising air and/or oxygen and/or steam and/or carbon dioxide or a combination of these different species.
